# EUROPEAN PATENT APPLICATION

(11) **EP 4 715 525 A1**
(43) Date of publication of application: **25.03.2026**
(21) Application number: 25201544.1
(22) Date of filing: 11.09.2025
(51) Int. Cl.: G06F 1/3287, G06F 1/3215, G06F 9/4401

(54) **PROGRAM, CONTROL METHOD OF ELECTRONIC DEVICE, AND ELECTRONIC DEVICE**

(30) Priority: 20.09.2024 JP 2024163922
(71) Applicant: Casio Computer Co., Ltd., Tokyo 151-8543 (JP)
(72) Inventor: YOSHIZAWA, Hiroaki, Tokyo, 205-8555 (JP)
(74) Representative: Plougmann Vingtoft a/s

(57) **Abstract**

A program for controlling an operation of an electronic device includes: a communication module including an antenna that performs wireless communication with an external device; and at least one processor, wherein the program causes the at least one processor to execute: operating the electronic device in one of a first mode and a second mode different from the first mode and at least performing wireless communication with the external device; activating the electronic device in the first mode without supplying power to the communication module in response to receiving an instruction to shift to power-off of the electronic device during the first mode and then receiving an instruction to shift to power-on of the electronic device; and supplying power to the communication module in association with power-on of the electronic device, and starting connection processing with the external device in response to receiving an instruction to shift to power-off of the electronic device during the second mode and then receiving an instruction to shift to power-on of the electronic device.

## Description

### CROSS-REFERENCE TO RELATED APPLICATIONS

The present application claims priority based on Japanese Patent Application No. 2024-163922 filed on September 20, 2024, the entire contents of which are incorporated herein.

### TECHNICAL FIELD

The present invention relates to a program, a control method of an electronic device, and an electronic device.

### BACKGROUND

In the invention described in Japanese Patent Application Laid-Open No. 2006-67488, in a portable communication terminal in which an invalid mode for invalidating wireless communication can be set, in a case where the portable communication terminal is in the invalid mode when the portable communication terminal is powered off, control is performed to activate the portable communication terminal in the invalid mode when the portable communication terminal is powered on next time, thereby simplifying the operation.

### SUMMARY

An object of the present invention is to perform optimized communication management in an electronic device capable of performing wireless communication with an external device when the electronic device is turned on.

A program for controlling an operation of an electronic device according to an embodiment of the present disclosure includes: a communication module including an antenna that performs wireless communication with an external device; and at least one processor, wherein the program causes the at least one processor to execute: operating the electronic device in one of a first mode and a second mode different from the first mode and at least performing wireless communication with the external device; activating the electronic device in the first mode without supplying power to the communication module in response to receiving an instruction to shift to power-off of the electronic device during the first mode and then receiving an instruction to shift to power-on of the electronic device; and supplying power to the communication module in association with power-on of the electronic device, and starting connection processing with the external device in response to receiving an instruction to shift to power-off of the electronic device during the second mode and then receiving an instruction to shift to power-on of the electronic device.

According to the embodiment, it is possible to perform optimized communication management in an electronic device capable of performing wireless communication with an external device when the electronic device is turned on.

### BRIEF DESCRIPTION OF THE DRAWINGS

FIG. 1 is a front view of an electronic device;
FIG. 2 is a block diagram illustrating a hardware configuration of the electronic device;
FIG. 3 is a diagram illustrating a concept of a CAL mode and a PC mode;
FIG. 4 is a diagram for explaining a process of connecting an electronic device and an external device by wireless communication;
FIG. 5 is a diagram illustrating transition of an operation mode of the electronic device;
FIG. 6 is a diagram illustrating power-supply-related processing for each operation mode of the electronic device and a display example of a display unit; and
FIG. 7 is a flowchart illustrating power-supply-related processing of the electronic device.

### DETAILED DESCRIPTION

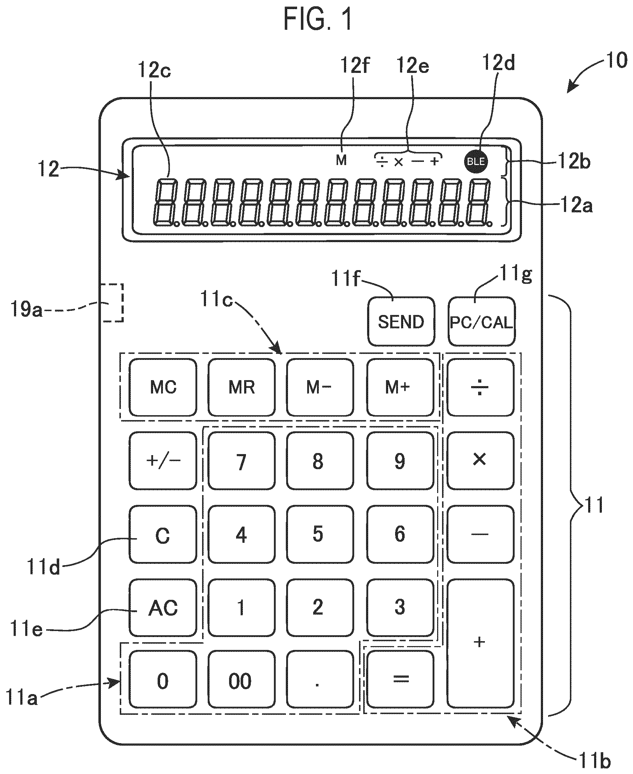

An electronic device 10 illustrated in FIG. 1 can switch operation modes between a calculator mode (hereinafter, referred to as a CAL mode) that is a first mode in a form used as a calculator for calculation and an external connection mode (hereinafter, referred to as a PC mode) that is a second mode in a form in which information is input to an external device by performing wireless communication with the external device (own device is not used as a calculator).

An operation unit 11 of the electronic device 10 is a portion that receives a user's operation, and includes a plurality of physical keys. A total of eleven numeric keys from "0" to "9" and "00" and a decimal point key are arranged in a numeric key region 11a of the operation unit 11. In a calculation command key region 11b of the operation unit 11, four-arithmetic-operation keys for selecting a type of arithmetic operation of addition, subtraction, multiplication, and division (+, -, ×, ÷), and an equal key for selecting completion of the arithmetic operation are arranged. In a memory key region 11c of the operation unit 11, four keys (MC, MR, M+, M-) for memory operation are arranged. The operation unit 11 further includes a clear key (C key) 11d, an all clear key (AC key) 11e, a Send key 11f, a PC/CAL key 11g, and the like. When the electronic device 10 is used as a calculator, the number input immediately before is erased by operating the clear key 11d, and all the numbers are erased by operating the all clear key 11e. The Send key 11f and the PC/CAL key 11g are used as operation keys related to wireless communication with an external device 18 to be described later, and constitute a setting unit for selectively setting either the CAL mode which is a first mode or the PC mode which is a second mode. Note that the operation unit 11 may include keys (for example, a function key for tax calculation, a function key for function calculation, and the like) other than the keys illustrated in FIG. 1, a slide switch other than a push-in operation type key, and the like.

The display unit 12 of the electronic device 10 includes a display device such as a liquid crystal display or a light emitting diode (LED). The display unit 12 includes a first display region 12a and a second display region 12b. The first display region 12a includes a plurality of 7-segment display units 12c. In the electronic device 10, twelve 7-segment display units 12c are arranged side by side, and the first display region 12a has a display capability of 12 digits. Each of the 7-segment display units 12c has seven segments that are elongated rod-shaped display units, and can individually switch on and off of display of each segment. The display content changes depending on the combination of ON and OFF of the display of the seven segments. Specifically, the 7-segment display unit 12c can display the Arabic numerals from 0 to 9 and a part of the Latin alphabet. In the second display region 12b, marks and icons specialized for displaying specific information in the electronic device 10 are arranged. Specifically, a communication indicator 12d indicating a state of communication with or connection to an external device, a four-arithmetic-operation indicator 12e displaying operation of addition, subtraction, multiplication, and division (+, -, ×, ÷), a memory indicator 12f displaying a state of memory calculation, and the like are arranged in the second display region 12b. Although FIG. 1 illustrates a mode in which the indicators in the second display region 12b are simultaneously displayed for convenience, actually, only the indicator corresponding to the key operated by the user in the calculation command key region 11b and the memory key region 11c is displayed for the four-arithmetic-operation indicator 12e and the memory indicator 12f, and display corresponding to a communication state to be described later is performed for the communication indicator 12d. The second display region 12b may include display elements (marks, icons, etc.) other than the indicators illustrated in FIG. 1.

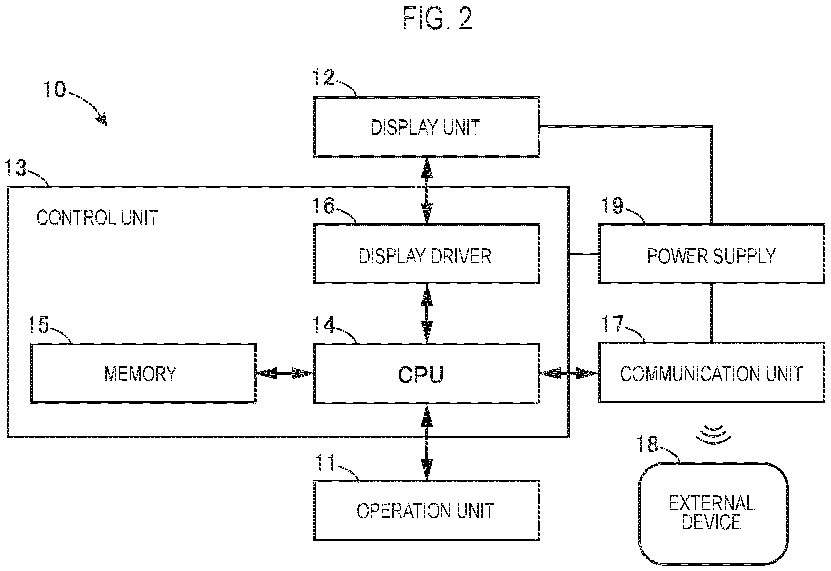

As illustrated in FIG. 2, a control unit 13 of the electronic device 10 includes a central processing unit (CPU) 14 that is a processor, a memory 15 that is a storage unit, and a display driver 16 that performs drive and display control of the display unit 12. When each key of the operation unit 11 is operated, an operation signal is input to the control unit 13. The memory 15 includes a read only memory (ROM) in which a program for controlling the electronic device 10 is stored, and a random access memory (RAM) used as a temporary data expansion area. Each unit of the electronic device 10 is controlled by reading a program stored in the ROM of the memory 15 and performing arithmetic processing by the memory 15. The display driver 16 controls the display unit 12 based on a control signal sent from the CPU 14 to perform display in the first display region 12a and the second display region 12b.

The communication unit 17 is a wireless communication module for the electronic device 10 to wirelessly communicate with another external device 18. The communication unit 17 includes an antenna that performs wireless communication with an external device. The external device 18 communicating with the communication unit 17 is, for example, a personal computer, a tablet computer, a smartphone, or the like. The communication standard of the communication unit 17 exchanges a key for encryption with the external device 18 to perform encrypted data communication, and Bluetooth Low Energy (registered trademark) is applied as an example. Hereinafter, a case where the electronic device 10 uses Bluetooth Low Energy as the communication standard, that is, a case where the communication unit 17 is a communication module for Bluetooth Low Energy will be described. The external device 18 includes a communication module capable of encrypted communication with the communication unit 17.

The electronic device 10 incorporates a power supply 19, and the electronic device 10 operates by power supply from the power supply 19. The power supply 19 is a secondary battery (lithium ion battery, nickel hydrogen battery, etc.) capable of repeating charging and discharging, and can be charged by supplying power to the power supply 19 via a power supply terminal 19a (FIG. 1). In addition, the electronic device 10 may be equipped with a solar panel that converts light energy into electricity, and supply power generated by the solar panel to the power supply 19.

The control unit 13 has a clocking function of acquiring time information from a time function (system time) of the operating system of the electronic device 10 or an integrated circuit (real time clock) on which the time function is mounted and measuring (clocking) the passage of time. The detection of the elapsed time in the following description is realized by the clocking function of the control unit 13.

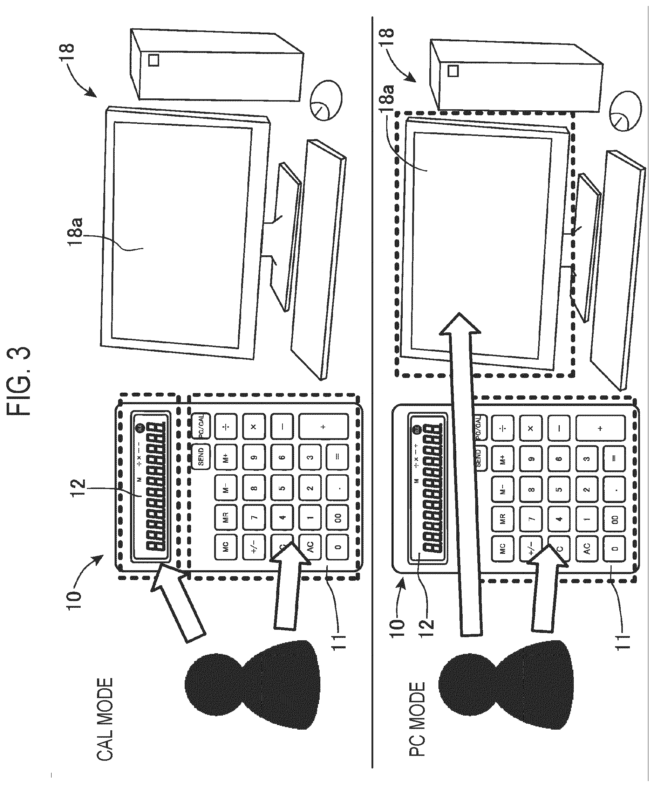

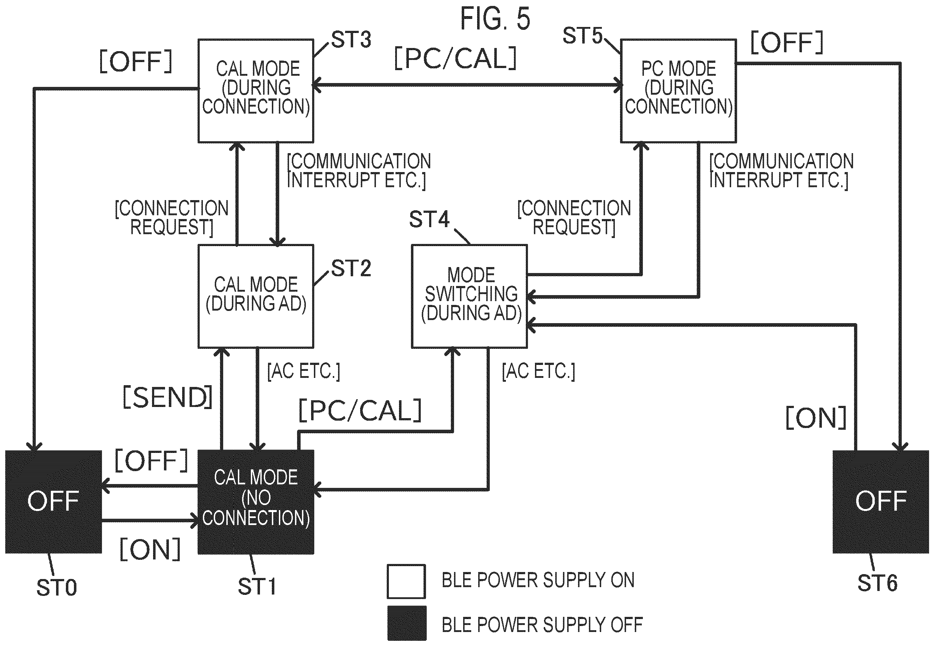

As illustrated in FIG. 3, in the CAL mode in the electronic device 10, when the user operates the operation unit 11, the electronic device 10 functions as a calculator to perform calculation or the like according to the user's operation, and the operation content (for example, a numerical value input by operating a numeric key) and the calculation result are displayed on the display unit 12. As will be described later, the CAL mode includes a case where the electronic device 10 functions as a standalone terminal that does not communicate with the external device 18 (CAL mode (no connection) of ST1 illustrated in FIG. 5) and a case where the electronic device 10 can communicate with the external device 18 (CAL mode (during connection) of ST3 illustrated in FIG. 5). In either case, the electronic device 10 functions as a single calculator.

In the PC mode in the electronic device 10, the electronic device 10 does not function as an independent calculator, and when the user operates the operation unit 11, a signal corresponding to the operation content is wirelessly transmitted from the electronic device 10 to the external device 18 via the communication unit 17, and reception processing of the signal is performed in the external device 18. That is, the operation unit 11 of the electronic device 10 can be used as an input operation device for the external device 18. The operation content by each key of the operation unit 11 in the PC mode is appropriately set according to the type of the operating system of the external device 18 and the application operating on the external device 18. For example, in a case where the application of the external device 18 is in a state of accepting numerical value input, when each key in the numeric key region 11a is operated by the electronic device 10 in the PC mode, numerical information corresponding to the key is input to the external device 18, and the electronic device 10 can be used as a numerical value input device (So-called ten-key device) in the external device 18. In the PC mode, a key other than the numeric key region 11a in the operation unit 11 may be used as a command key for inputting a predetermined command other than a numerical value to the external device 18. For example, the keys of the calculation command key region 11b and the memory key region 11c can function as arrow keys for cursor movement, or can function as command keys for copying and pasting a character string. The operation content input via the operation unit 11 in the PC mode and the processing content based on the operation are displayed on the display unit 18a included in the external device 18. As described above, the PC mode of the electronic device 10 is a mode in which information is input to at least the external device 18 without using the electronic device itself as a calculator.

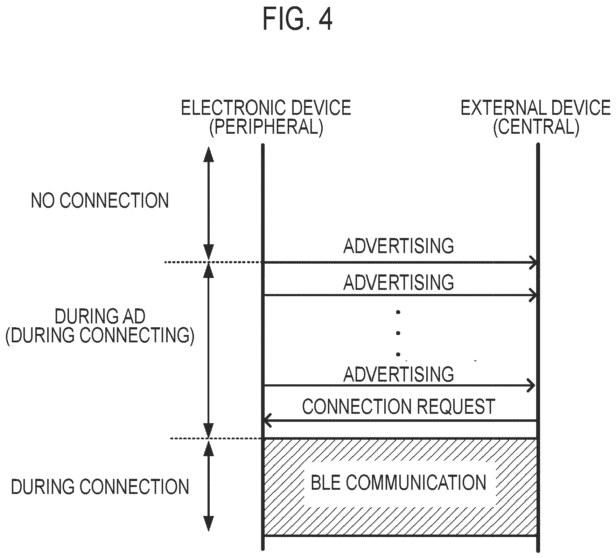

As illustrated in FIG. 4, communication between the electronic device 10 and the external device 18 is performed with the electronic device 10 as a peripheral device and the external device 18 as a central device. In a state where the communication unit 17 is powered on and the electronic device 10 and the external device 18 are not connected, the electronic device 10 advertises at a predetermined cycle. Advertising is broadcast communication in which data is transmitted from a peripheral device to an unspecified number of parties, and is a state in which the peripheral device provides its own location to a central device and waits for connection (a state in which connection is attempted). When the external device 18, which is a central device, makes a connection request to the electronic device 10 being advertised, the electronic device 10 stops advertising and switches to one-to-one communication with the external device 18.

Data communication between the electronic device 10 and the external device 18 is performed by encrypting data. In a state in which one-to-one communication is performed, pairing is performed in which a key for data encryption is exchanged between the electronic device 10 and the external device 18, and when the pairing is established, a connection state in which data communication can be performed between the electronic device 10 and the external device 18 is established. In the case of the electronic device 10 and the external device 18 having a connection record in the past, if bonding for storing the key exchanged in the previous pairing has been performed, the electronic device 10 and the external device 18 shift to a state in which encrypted communication is possible without performing the pairing processing at the time of establishment of communication.

As illustrated in FIG. 5, the electronic device 10 roughly has five operation modes from ST1 to ST5. ST0 and ST6 are states in which the main power supply of the electronic device 10 is off. When the user performs an operation to turn on the main power in a state where the main power is off, an instruction to shift to power-on is input to the control unit 13, and the electronic device 10 is activated. The main power is turned on and off by, for example, a long press of the all clear key 11e or an operation of a power switch (not illustrated). The control unit 13 stores the operation mode when the main power of the electronic device 10 is turned off last time in the memory 15. In a case where the previous operation mode is the CAL mode, the control unit activates the electronic device 10 in the CAL mode by turning on the main power. In a case where the previous operation mode is the PC mode, the control unit activates the electronic device 10 in the PC mode by turning on the main power.

When the electronic device 10 is activated in the CAL mode by turning on the main power, the CAL mode (no connection) of ST1 is selected. In the CAL mode (no connection) of ST1, the control unit 13 continues the state in which the power supply of the communication unit 17 is off and operates the electronic device 10 in the unconnected state in which communication with the external device 18 is not performed. That is, the electronic device 10 is operated as a standalone calculator. When the user operates the Send key 11f during the operation in the CAL mode (no connection) of ST1, the control unit 13 turns on the power of the communication unit 17 to put the communication unit into the advertising state, and transitions to the CAL mode (during AD) of ST2. When a connection request from the external device 18 is received in the CAL mode (during AD) of ST2 and a connection with the external device 18 (a state in which encrypted data communication is possible) is established, the mode transitions to the CAL mode (during connection) of ST3.

In a case where the user operates the operation unit 11 to input a numerical value to the electronic device 10 or cause the electronic device 10 to perform calculation in the CAL mode (no connection) of ST1, the numerical value and the calculation result (the value displayed in the first display region 12a of the display unit 12) input at the time of operating the Send key 11f are transmitted to the external device 18 at the stage of entering the CAL mode (during connection) of ST3. When the user operates the Send key 11f in the CAL mode (during connection) of ST3 while operating the operation unit 11 to input a numerical value to the electronic device 10 or causing the electronic device 10 to perform calculation, the numerical value input at the time of operating the Send key 11f and the calculation result (the value displayed in the first display region 12a of the display unit 12) are transmitted to the external device 18. That is, in the CAL mode, the numerical value input in the CAL mode and the calculation result obtained in the CAL mode can be shared with the external device 18 to which the electronic device 10 is wirelessly connected by operating the Send key 11f.

When a specific time elapses or the all clear key 11e is performed in the CAL mode (during AD) of ST2, the control unit 13 turns off the power of the communication unit 17 to cancel the advertising and transitions to the CAL mode (no connection) of ST1. When communication with the external device 18 is interrupted (for example, the power of the external device 18 is turned off, the distance between the electronic device 10 and the external device 18 is greatly increased, or the like) in the CAL mode (during connection) of ST3, the mode transitions to the CAL mode (during AD) of ST2.

When the user operates the PC/CAL key 11g during the operation in the CAL mode (no connection) of ST1, the control unit 13 turns on the power of the communication unit 17 to put the communication unit into the advertising state, and transitions to the mode switching state (during AD) of ST4. In response to a connection request from the external device 18 in the mode switching state (during AD) of ST4, when connection with the external device 18 (a state in which encrypted data communication is possible) is established, the mode transitions to the PC mode (during connection) of ST5. When the user operates the PC/CAL key 11g during the operation in the CAL mode (during connection) of ST3, the mode transitions to the PC mode (during connection) of ST5. In the CAL mode (during connection) of ST3, since the connection between the electronic device 10 and the external device 18 is already established, the mode can be shifted to the PC mode (during connection) of ST5 without advertising. In this manner, it is possible to switch from the CAL mode to the PC mode according to an arbitrary operation by the user. In the PC mode (during connection) of ST5, operation content performed by the user on the operation unit 11 of the electronic device 10 is input to the external device 18, and the electronic device 10 can be used as a device for input operation of the external device 18. Further, when the user operates the PC/CAL key 11g in the PC mode (during connection) of ST5, the mode transitions to the CAL mode (during connection) of ST3.

When a specific time elapses or the all clear key 11e is performed in the mode switching state (during AD) of ST4, the control unit 13 turns off the power of the communication unit 17 to cancel the advertising and transitions to the CAL mode (no connection) of ST1. When communication with the external device 18 is interrupted (for example, the power of the external device 18 is turned off, the distance between the electronic device 10 and the external device 18 is greatly increased, or the like) in the PC mode (during connection) of ST5, the mode transitions to the mode switching state (during AD) of ST4.

In a case where the electronic device 10 is activated in the PC mode by turning on the main power, the control unit 13 supplies power to the communication unit 17 to turn on the power and start advertising, and performs connection with the external device 18 after setting the mode switching state (during AD) of ST4. The end of the previous use of the electronic device 10 in the PC mode means that there is a record of pairing and connection with the external device 18. Therefore, when the external device 18 is activated at this stage of starting the connection processing on the electronic device 10 side, and can communicate with the electronic device 10, the connection between the electronic device 10 and the external device 18 is immediately established, and the electronic device 10 enters the PC mode (during connection) of ST5. However, in a state where the external device 18 is not powered on, or in a state where the electronic device 10 and the external device 18 are too far apart to communicate with each other, the PC mode is not established, and the mode switching state (AD) of ST4 continues.

When the electronic device 10 is operating in the CAL mode (ST1, ST3) or the PC mode (PT5), if the user performs an operation to turn off the main power and the control unit 13 accepts an instruction to shift to power-off, the control unit 13 turns off the main power of the electronic device 10. In addition, the electronic device 10 has an automatic power-off function of automatically turning off the main power after a lapse of a specific time, and when a state in which there is no input operation by the user continues for a specific time in the CAL mode (ST1, ST3) or the PC mode (PT5), the control unit 13 receives an instruction to shift to power-off with the lapse of the time as a trigger, and turns off the main power of the electronic device 10. When the main power in the CAL mode (ST1, ST3) is turned off, the power of ST0 is turned off, and when the main power in the PC mode (ST5) is turned off, the power of ST6 is turned off. The control unit 13 monitors the operation mode of the electronic device 10 when the main power is turned off, and stores in the memory 15 whether the operation mode at the time of the previous operation is the CAL mode or the PC mode. That is, when transitioning to the power-off state of ST0, information indicating that the mode has been the CAL mode at the time of the previous operation is stored in the memory 15, and when transitioning to the power-off state of ST6, information indicating that the mode has been the PC mode at the time of the previous operation is stored in the memory 15. Therefore, when the main power of the electronic device 10 is turned on, the control unit 13 can select whether to activate in the CAL mode (the CAL mode (no connection) of ST1 that does not supply power to the communication unit 17) or the PC mode by referring to the information stored in the memory 15.

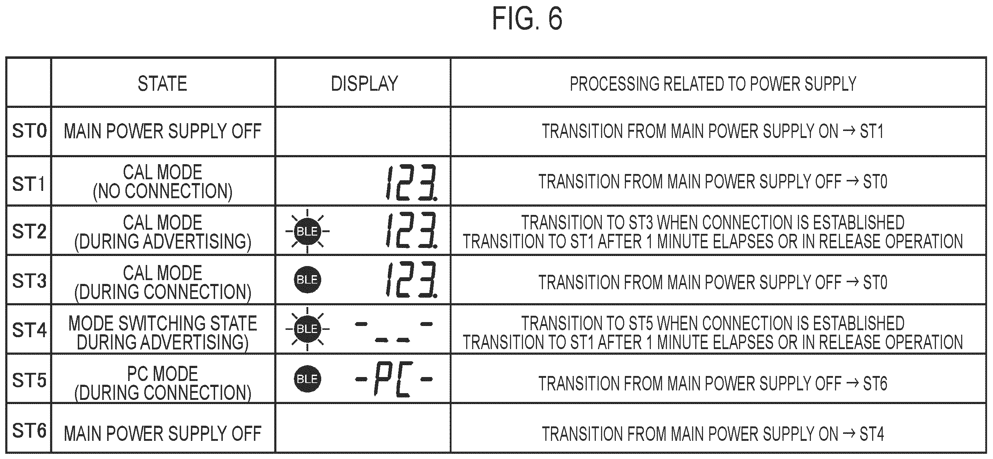

The control unit 13 causes the display unit 12 to perform display in each mode of ST1 to ST5 via the display driver 16. The user can check the operation mode of the electronic device 10 by viewing the display content of the display unit 12. FIG. 6 illustrates a display example of the display unit 12 in each mode. In the CAL mode, a numerical value or a calculation result input by the user is displayed in the first display region 12a in any of non-connection with the external device 18 (ST1), advertising (ST2), and connection with the external device 18 (ST3). The display example of FIG. 6 illustrates a case where the respective keys "1", "2", and "3" in the numeric key region 11a are operated. During advertising (ST2, ST4), the communication indicator 12d in the second display region 12b blinks. In the CAL mode (during AD) of ST2, the numerical value and the calculation result are displayed in the first display region 12a as described above, but in the mode switching state (during AD) of ST4, a special form of display using four 7-segment display units 12c (display in which two hyphens and two underbars are combined) is displayed in the first display region 12a. During the connection with the external device 18 (ST3, ST5), the communication indicator 12d in the second display region 12b lights up (continuously lights up). In the CAL mode (during connection) of ST3, the numerical value and the calculation result are displayed in the first display region 12a as described above, but in the PC mode (during connection) of ST5, a special form of display using four 7-segment display units 12c (display in which two hyphens and characters of a PC are combined) is displayed in the first display region 12a.

As described above, according to the operation of the user, the control unit 13 of the electronic device 10 selects one of the CAL mode, which is the first mode in which the own device operates as a calculator, and the PC mode, which is the second mode in which wireless communication is performed with the external device 18 to perform information input to the external device 18 (the electronic device is not used as a calculator). The CAL mode includes a CAL mode (no connection) of ST1 that is a non-connection mode in which power is not supplied to the communication unit 17 and wireless communication with the external device 18 is not performed, and a CAL mode (during connection) of ST3 that is a connection mode in which power is supplied to the communication unit 17 and wireless communication with the external device 18 is performed. Then, as illustrated in FIGS. 5 and 6, the control unit 13 differentiates the mode of activation of the electronic device 10 when the instruction to shift to power-on of the own device is received next between the case where the instruction to shift to power-off of the own device is received during the CAL mode and the case where the instruction to shift to power-off of the own device is received during the PC mode.

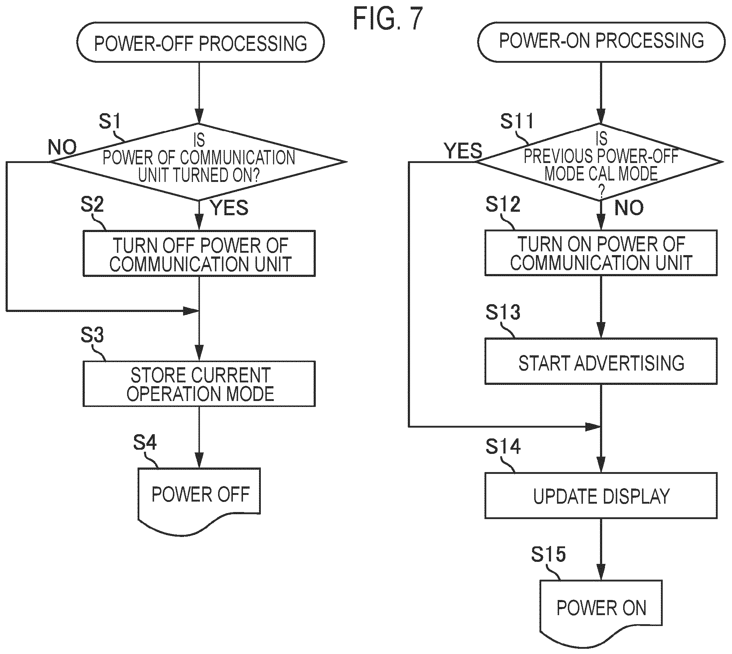

When the control unit 13 receives an instruction to shift to power-off of the own device (an operation signal issued by a long press operation or the like of the all clear key 11e by the user, and a control signal issued by automatic power-off processing with a lapse of time in a state where there is no input operation by the user) while the electronic device 10 is operating in the CAL mode (ST1, ST3) or the PC mode (ST5), the control unit 13 performs power-off processing illustrated in the flowchart of FIG. 7. When the power-off processing is started, the control unit 13 checks whether the power of the communication unit 17 is on in step S1. When the power of the communication unit 17 is on (YES in step S1), the process proceeds to step S2, and the control unit 13 executes a process of stopping the power supply to the communication unit 17 and turning off the power of the communication unit 17, and then proceeds to step S3. When the power of the communication unit 17 is off (NO in step S1), the process proceeds to step S3 without going through step S2. In step S3, the control unit 13 causes the memory 15 to store the operation mode of the electronic device 10 at the time of receiving the instruction to shift to power-off. Even when the operation mode of the electronic device 10 is either the CAL mode (no connection) of ST1 or the CAL mode (during connection) of ST3 at the time of receiving the instruction to shift to power-off, the CAL mode (first mode) including these modes is stored in the memory 15 as the operation mode immediately before power-off. When the operation mode of the electronic device 10 is the PC mode (during connection) in ST5 at the time of receiving the instruction to shift to power-off, the PC mode (second mode) is stored in the memory 15 as the operation mode immediately before power off. After completion of step S3, the control unit 13 stops power supply to each unit of the electronic device 10 and shifts the electronic device 10 to the power-off state in step S4. When the operation mode immediately before power-off is the CAL mode, the power supply is turned off in ST0 in FIGS. 5 and 6, and when the operation mode immediately before power-off is the PC mode, the power supply is turned off in ST6 in FIGS. 5 and 6. That is, the difference between the power-off state of ST0 and the power-off state of ST6 is the content of the operation mode immediately before power-off stored in the memory 15. In the power-off state of the electronic device 10, minute power supply for maintaining information storage is performed in the memory 15, and the information of the operation mode immediately before power-off stored in the memory 15 in step S3 remains without being erased.

As illustrated in FIG. 6, when a state in which the connection with the external device 18 is not established continues for 1 minute or more during advertising of the electronic device 10 (ST2, ST4), the control unit 13 turns off the power of the communication unit 17 to cancel (stop) the advertising. In addition, when receiving a command to stop advertising as a result of a user's advertising canceling operation (operation of the all clear key 11e or the like) during advertising (ST2, ST4), the control unit 13 turns off the power of the communication unit 17 to cancel (stop) advertising. Then, by the cancellation of the advertising, the mode transitions to the CAL mode (no connection) of ST1. The control unit 13 does not execute processing related to automatic power off during advertising (ST2, ST4). During advertising (ST2, ST4), at a stage where the connection with the external device 18 is established and the mode shifts to the CAL mode (during connection) of ST3 or the PC mode (during connection) of ST5, or at a stage where the connection with the external device 18 is not established and the mode shifts to the CAL mode (no connection) of ST1, the control unit 13 starts counting a time during which the input operation by the user is not accepted, and performs the automatic power-off processing after a specific time elapses. Therefore, the control unit 13 does not perform the processing of directly shifting to the power-off state of the own device during advertising (ST2, ST4), but in a case where the power-off processing illustrated in FIG. 7 is started during advertising due to some situation, the control unit 13 preferably stores the operation mode immediately before power-off in the memory 15 as the CAL mode in step S3.

In a state in which the main power of the electronic device 10 is off, when the control unit 13 receives an instruction to shift to power-on of the own device (an operation signal issued by a long press operation or the like of the all clear key 11e by the user), the control unit 13 performs power-on processing shown in the flowchart of FIG. 7. When the power-on processing is started, the control unit 13 refers to the operation mode of the own device stored in the memory 15 in the previous power-off processing (operation mode immediately before power-off), and determines in step S11 whether the operation mode immediately before power-off is the CAL mode.

In a case where the operation mode stored in the memory 15 immediately before power-off is the PC mode (NO in step S1), that is, in a case where the electronic device 10 is activated from the power-off state in ST6, the control unit 13 executes processing of turning on the power of the communication unit 17 in step S12 and starts advertising in step S13 (shifts to the mode switching state (during AD) in ST4). As described above, at this stage, when the external device 18 is activated and can communicate with the electronic device 10, the connection between the electronic device 10 and the external device 18 is immediately established, and the mode shifts to the PC mode (during connection) in ST5. That is, when the wireless communication with the external device 18 is established after starting the connection processing at the time of activation of the electronic device 10, the control unit 13 operates the own device in the PC mode (during connection) of ST5. On the other hand, in a case where the connection with the external device 18 is not immediately established at the time point the connection processing is started at the time of activation of the electronic device 10, the control unit 13 maintains the advertising state (the mode switching state (during AD) of ST4 continues). The control unit 13 causes the display unit 12 to execute display update in step S14, and causes the display unit 12 to display display contents (see FIG. 6) indicating the mode switching state (during AD) of ST4 or the PC mode (during connection) of ST5 according to the current operation mode of the electronic device 10. Then, the control unit 13 sets each unit other than the communication unit 17 and the display unit 12 to be operable, and completes the activation of the own device in step S15.

Note that, in a case where a specific time (1 minute) has elapsed since the start of the advertising in step S13, or in a case where a command to stop the advertising by a cancel operation (operation of the all clear key 11e or the like) by the user is received during advertising, that is, in a case where the wireless communication with the external device 18 is not established after the start of the connection processing, the control unit 13 stops the supply of power to the communication unit 17, turns off the power of the communication unit 17 to cancel (stop) the advertising, and shifts to the CAL mode (no connection) of ST1.

When the operation mode immediately before power-off stored in the memory 15 is the CAL mode (YES in step S1), that is, when the electronic device 10 is activated from the power-off state of ST0, the control unit 13 causes the display unit 12 to be updated in step S14 while keeping the power of the communication unit 17 off, and causes the display content (see FIG. 6) corresponding to the CAL mode (no connection) of ST1. Then, each unit other than the communication unit 17 and the display unit 12 is also set to be operable, the activation of the own device is completed in step S15, and the electronic device 10 is operated in the CAL mode (no connection) of ST1. That is, even if the mode at the time of receiving the instruction to shift to power-off of the own device is either the CAL mode (no connection) of ST1 or the CAL mode (during connection) of ST3, when receiving the instruction to shift to power-on of the electronic device after receiving the instruction to shift to power-off of the electronic device, the control unit 13 activates the electronic device 10 in the CAL mode (no connection) of ST1. Note that, in the power-on processing, in a case where the operation mode immediately before the previous power-off is not stored in the memory 15, it is preferable that the control unit 13 perform processing of activating the electronic device 10 in the CAL mode (no connection) of ST1 while keeping the power of the communication unit 17 off.

As described above, when the control unit 13 of the electronic device 10 receives the instruction to shift the own device to the power-off and then receives the instruction to shift the own device to the power-on, the control unit controls the power supply to the communication unit 17 when the power is turned on according to the operation mode of the own device when the power is off. In a case of the CAL mode (ST1, ST3) at the time of power-off, the control unit 13 activates the own device in the CAL mode (CAL mode (no connection) of ST1) without supplying power to the communication unit 17 at the time of the next power-on. In a case where the mode is the PC mode (ST5) when the power is off, the control unit 13 starts the connection processing by supplying power to the communication unit 17 to be in the advertising state (mode switching state (during AD) of ST4) in association with the next power-on, and performs the activation processing to operate the own device in the PC mode (CAL mode (no connection) of ST5) as soon as the connection with the external device 18 is established. The reason why the operation state of the communication unit 17 is managed in this way when the electronic device 10 is turned on is that, in a case where the electronic device 10 is repeatedly used by the same user or in a similar use state, it is assumed that the user often selects use in the same operation mode as that in the previous use. Therefore, by operating the electronic device 10 in the same operation mode as that in the previous use at the time of turning on the electronic device 10, it is possible to quickly start using the electronic device 10 and the external device 18 without taking time and effort to change the mode, and the usability of the system including the electronic device 10 and the external device 18 is improved.

In addition, by appropriately controlling power supply to the communication unit 17 at the time of activation of the electronic device 10, it is possible to suppress wasteful power consumption in a situation where wireless communication with the external device 18 is not required. For example, in the highly independent CAL mode (first mode) in which the electronic device 10 functions as a calculator and consistently performs from the input operation to the calculation processing and the display processing by its own device, wireless communication with the external device 18 is not required while the calculation is performed using the electronic device 10. Therefore, in a situation where the use in the CAL mode is assumed (in a case where the operation mode at the time of previous power-off is the CAL mode), the electronic device 10 is activated in a state where the power of the communication unit 17 is turned off in the power-on processing, whereby the effect of reducing the power consumption can be obtained. In addition, there is no waiting time in advertising, and the electronic device 10 can be quickly used as a calculator.

In the power-off processing, when the control unit 13 receives an instruction to shift the own device to power-off, whether the mode is the CAL mode (first mode) or the PC mode (second mode) is stored in the memory 15. In addition, in the power-on processing, when the control unit 13 receives the instruction to shift the power to the power-on of the own device, the control unit selects, based on the contents stored in the memory 15, whether to activate the own device in the CAL mode (first mode) without supplying power to the communication unit 17 or to start the connection processing with the external device 18 by supplying power to the communication unit 17. Therefore, it is possible to realize communication management at the time of power-on optimized for the use situation of the electronic device 10 with simple control at low cost without using a special additional structure.

The CAL mode in the present embodiment includes the CAL mode (no connection) of ST1 which is a non-connection mode in which wireless communication with the external device 18 is not performed and the CAL mode (during connection) of ST3 which is a connection mode in which wireless communication with the external device 18 is performed. The CAL mode (during connection) of ST3 is a mode in which all input operations of the user to the operation unit 11 are not transmitted to the external device 18 in real time, but information is transmitted to the external device 18 only in a case where the user performs a specific input operation (operation of the Send key 11f) with the transmission intention. That is, the CAL mode (during connection) of ST3 is a use mode in which the frequency of performing wireless communication with the external device 18 is low and the necessity of immediately connecting to the external device 18 immediately after the activation of the electronic device 10 is low as compared with the PC mode (during connection) of ST5. Therefore, in a case where the electronic device 10 is activated in the CAL mode, it is reasonable to first activate the electronic device in the CAL mode (no connection) of ST1 and then shift the electronic device to the CAL mode (during connection) of ST3 by the user's input operation as necessary, instead of supplying power to the communication unit 17 from the beginning to support the CAL mode (during connection) of ST3. In addition, the operation time of the communication unit 17 can be shortened by the processing, and power saving can be achieved.

On the other hand, in a situation where the use in the PC mode is assumed (in a case where the operation mode at the time of the previous power-off is the PC mode), it is assumed that there is a request to immediately reflect the input operation of the user to the operation unit 11 in the information input to the external device 18 immediately after the electronic device 10 is turned on. Therefore, in the power-on processing, by turning on the power of the communication unit 17 and activating the electronic device 10, it is not necessary for the user to perform an additional operation for the connection processing with the external device 18, and the electronic device 10 can be efficiently used in the PC mode without taking time and effort.

In the power-on processing, when there is no connection request from the external device 18 and the communication connection is not established although the control unit 13 turns on the power of the communication unit 17 and selects the activation option in the PC mode, the process waits in the mode switching state (during AD) of ST4. Then, when a specific time (1 minute) elapses or the user performs an advertising cancel operation (operation of the all clear key 11e), the control unit 13 receives an advertising stop command, and turns off the power of the communication unit 17 to shift to the CAL mode (no connection) of ST1. As a result, even when the connection with the external device 18 is not established and the electronic device 10 cannot be operated in the PC mode in the power-on processing in a case where the operation mode immediately before the previous power-off is the PC mode, it is possible to automatically shift to the power saving mode and reduce power consumption.

Even when the control unit 13 activates the electronic device 10 in either the CAL mode or the PC mode, the CAL mode and the PC mode can be arbitrarily switched by the user operating the PC/CAL key 11g during the operation in each operation mode (ST1, ST3, ST5) (see FIG. 5). Therefore, after the activation of the electronic device 10, it is possible to easily cope with the switching of the operation mode according to the intention of the user.

The above embodiments have been given as specific examples to facilitate understanding of the invention, and the present invention is not limited to these embodiments, and various modifications and changes can be made without departing from the gist of the invention.

In the above embodiment, the instruction to shift the electronic device 10 to power-on is input to the control unit 13 by the user's operation, but the present invention is not limited thereto. For example, the electronic device 10 may be controlled to be automatically activated at a predetermined time by a timer, and an activation command by the timer may be a shift instruction to power-on.

In the above embodiment, in the power-off processing of the electronic device 10, the control unit 13 turns off the main power of the electronic device. However, the power-off of the electronic device in the present disclosure is not limited to the process in a narrow sense that the main power is turned off, and may be a so-called sleep state (standby state) in which the main power is turned on and the power supply to each unit is temporarily stopped or minimized. In the sleep state, at least the power of the communication unit 17 is turned off. In the sleep state, the operation unit 11 can receive an input operation (including an operation other than turning on the main power supply), and when the operation unit 11 receives the input operation, power supply to each unit is resumed and the sleep state is canceled. Note that control may be performed such that the sleep state is released only when a specific key of the operation unit 11 is operated, or control may be performed such that the sleep state can be released by operating all keys of the operation unit 11.

The electronic device 10 according to the above embodiment functions as a calculator in the first mode, but the electronic device to which the present invention is applied is not limited to a calculator. For example, in a wristwatch-type wearable device, there is known a wristwatch-type wearable device capable of switching between a first mode in which processing such as time counting and life log management is performed by the own device when an input operation is received, and a second mode in which wireless communication is performed with an external device such as a smartphone to perform some operation (reproduction, stop, or the like of music) on the external device. The present invention can also be applied to such a type of electronic device, and by selecting the operation state of the communication unit when the power is turned on (controlling the power supply to the communication unit) according to the operation mode when the power is turned off last time, it is possible to improve the usability of the electronic device and achieve power saving.

Although the electronic device 10 of the above embodiment includes the plurality of physical keys in the operation unit 11, the means for accepting an input operation included in the electronic device is not limited to such physical keys, and may be a software keyboard or the like that performs an input operation by contacting a touch panel.

## Claims

1. A program for controlling an operation of an electronic device including:
a communication module including an antenna that performs wireless communication with an external device; and
at least one processor, wherein
the program causes the at least one processor to execute:
operating the electronic device in one of a first mode and a second mode different from the first mode and at least performing wireless communication with the external device;
activating the electronic device in the first mode without supplying power to the communication module in response to receiving an instruction to shift to power-off of the electronic device during the first mode and then receiving an instruction to shift to power-on of the electronic device; and
supplying power to the communication module in association with power-on of the electronic device, and starting connection processing with the external device in response to receiving an instruction to shift to power-off of the electronic device during the second mode and then receiving an instruction to shift to power-on of the electronic device.

2. The program according to claim 1, wherein
the first mode includes a non-connection mode in which power is not supplied to the communication module and wireless communication with the external device is not performed, and a connection mode in which power is supplied to the communication module and wireless communication with the external device is performed, and
the program causes the at least one processor to execute activating, even if a mode at a time of receiving an instruction to shift to power-off of the electronic device is either the non-connection mode or the connection mode of the first mode, the electronic device in the non-connection mode of the first mode in response to receiving an instruction to shift to power-off of the electronic device and then receiving an instruction to shift to power-on of the electronic device.

3. The program according to claim 1, wherein
the program causes the at least one processor to execute:
operating the electronic device in the second mode in response to wireless communication with the external device being established after the connection processing with the external device is started; and
stopping supply of power to the communication module and operating the electronic device in the first mode in response to wireless communication with the external device being not established after the connection processing with the external device is started.

4. The program according to claim 1, wherein
the first mode is a mode for causing the electronic device to function as a calculator, and
the second mode is a mode in which the electronic device does not function as a calculator, and information input by an operation on an operation unit that receives a user's operation is transmitted to the external device by the communication module.

5. The program according to claim 1, wherein
the program causes the at least one processor to execute:
causing a storage unit to store whether the electronic device is in the first mode or the second mode in response to an instruction to shift the electronic device to power-off being received; and
selecting, in response to receiving an instruction to shift the electronic device to power-on, whether to activate the electronic device in the first mode without supplying power to the communication module or to start the connection processing with the external device by supplying power to the communication module based on contents stored in the storage unit.

6. A control method of an electronic device including:
a communication module including an antenna that performs wireless communication with an external device; and
at least one processor that operates the electronic device in one of a first mode and a second mode that is different from the first mode and performs wireless communication with at least the external device, wherein
the at least one processor is configured to execute:
activating the electronic device in the first mode without supplying power to the communication module in response to receiving an instruction to shift to power-off of the electronic device during the first mode and then receiving an instruction to shift to power-on of the electronic device; and
supplying power to the communication module in association with power-on of the electronic device, and starting connection processing with the external device in response to receiving an instruction to shift to power-off of the electronic device during the second mode and then receiving an instruction to shift to power-on of the electronic device.

7. An electronic device comprising:
a communication module including an antenna that performs wireless communication with an external device; and
at least one processor that operates the electronic device in one of a first mode and a second mode that is different from the first mode and performs wireless communication with at least the external device, wherein
the at least one processor is configured to execute:
a process of activating the electronic device in the first mode without supplying power to the communication module in response to receiving an instruction to shift to power-off of the electronic device during the first mode and then receiving an instruction to shift to power-on of the electronic device; and
a process of supplying power to the communication module in association with power-on of the electronic device, and starting connection processing with the external device in response to receiving an instruction to shift to power-off of the electronic device during the second mode and then receiving an instruction to shift to power-on of the electronic device.
